# EUROPÄISCHE PATENTSCHRIFT

(11) **EP 3 614 026 B1**
(45) Veröffentlichungstag und Bekanntmachung des Hinweises auf die Patenterteilung: **25.06.2025**
(21) Anmeldenummer: 19192127.9
(22) Anmeldetag: 16.08.2019
(51) Int. Cl.: F16K 11/074, F16K 31/60

(54) **VENTILKARTUSCHE FÜR ZUMINDEST EINE SANITÄRARMATUR MIT UMSTELLBARER FUNKTION**
VALVE CARTRIDGE FOR AT LEAST ONE PLUMBING FITTING WITH ADJUSTABLE FUNCTION
CARTOUCHE DE SOUPAPE POUR AU MOINS UNE ARMATURE SANITAIRE À FONCTION RÉGLABLE

(30) Priorität: 20.08.2018 DE 102018120203
(43) Veröffentlichungstag der Anmeldung: 26.02.2020
(73) Patentinhaber: Grohe AG, 58653 Hemer (DE)
(72) Erfinder: Buchmüller, Janik, 58239 Schwerte (DE); Kinikarslan, Turgut, 58454 Witten (DE); Luig, Frank-Thomas, 58708 Menden (DE)

(56) Entgegenhaltungen:
- EP-A1- 2 418 409
- CN-A- 102 537 496
- DE-A1- 10 133 033
- DE-A1- 2 841 998
- DE-U1- 20 008 679
- GB-A- 1 461 381
- US-A- 3 776 373
- US-A1- 2017 067 236
- US-A1- 2018 059 693

## Beschreibung

Die vorliegende Erfindung betrifft eine Ventilkartusche für zumindest eine Sanitärarmatur, mit der der Durchfluss einer Flüssigkeit durch zumindest eine Flüssigkeitsleitung der zumindest einen Sanitärarmatur steuerbar ist. Sanitärarmaturen dienen insbesondere der bedarfsgerechten Bereitstellung einer Flüssigkeit an einem Spülbecken, Waschbecken, Dusche und/oder Badewanne. Eine Ventilkartusche gemäß dem Oberbegriff von Anspruch 1 ist beispielsweise aus der Druckschrift DE 28 41 998 A1 bekannt.

Ventilkartuschen werden regelmäßig in ein Armaturengehäuse der Sanitärarmatur oder in eine Funktionseinheit eines Unterputzeinbaukörpers eingesetzt. Durch eine Ventilkartusche kann der Flüssigkeitsfluss zu einer oder mehreren Flüssigkeitsabgabestellen bzw. Sanitärarmaturen, wie zum Beispiel Kopfbrausen und Handbrausen einer Dusche, steuerbar sein. Für das Absperren eines Badewannenthermostaten (zwei Abläufe für die Flüssigkeit) und das Absperren eines Brausethermostaten (entweder ein oder zwei gleichzeitig gesteuerte Abläufe für die Flüssigkeit) sind unterschiedliche Ventilkartuschen, beispielsweise nach Art eines Aquadimmers und (linksschließenden oder rechtsschließenden) Oberteils, erforderlich. Diese weisen unterschiedliche Geometrien für die Flüssigkeitszuführung bzw. Flüssigkeitsabführung auf, sodass mindestens zwei verschiedene Armaturengehäuse bzw. Armaturengehäuseeinsätze erforderlich sind. Hierdurch wird die Bauteilanzahl und die Kosten erhöht. Weitere Ventile sind beispielsweise in den Druckschriften GB 1 461 381 A, US 2018/0059693 A1, DE 200 08 679 U1, DE 101 33 033 A1, EP 2 418 409 A1, US 2017/0067236 A1, CN 102537496 A und US 3,776,373 A1 beschrieben.

Aufgabe der Erfindung ist es daher, die mit Bezug auf den Stand der Technik geschilderten Probleme zumindest teilweise zu lösen und insbesondere eine Ventilkartusche anzugeben, die ohne Änderung der Flüssigkeitszuführung bzw. Flüssigkeitsabführung mit geringem Aufwand für unterschiedliche Einsatzzwecke anpassbar sind und für die somit keine verschiedenen Armaturengehäuse bzw. Armaturengehäuseeinsätze erforderlich sind

Diese Aufgaben werden gelöst mit einer Ventilkartusche gemäß den Merkmalen des unabhängigen Patentanspruchs. Weitere vorteilhafte Ausgestaltungen der Ventilkartusche sind in den abhängigen Patentansprüchen angegeben. Es ist darauf hinzuweisen, dass die in den abhängigen Patentansprüchen einzeln aufgeführten Merkmale in beliebiger technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt eine Ventilkartusche für zumindest eine Sanitärarmatur gemäß dem Anspruch 1 bei.

Die Ventilkartusche kann insbesondere für zumindest eine Sanitärarmatur oder zumindest einen Unterputzeinbaukörper für zumindest eine Sanitärarmatur verwendbar sein. Sanitärarmaturen dienen insbesondere der bedarfsgerechten Bereitstellung von Flüssigkeiten, wie insbesondere Wasser, an Spülbecken, Waschbecken, Duschen und/oder Badewannen. Hierzu kann den Sanitärarmaturen oder den Unterputzeinbaukörpern ein Kaltwasser mit einer Kaltwassertemperatur und ein Warmwasser mit einer Warmwassertemperatur zugeführt werden, die durch die Sanitärarmaturen oder die Unterputzeinbaukörper, beispielsweise mittels eines Mischventils oder einer Thermostatmischkartusche, zu einem Mischwasser mit einer gewünschten Mischwassertemperatur mischbar sind. Die Kaltwassertemperatur beträgt insbesondere maximal 25 °C (Celsius), bevorzugt 1 °C bis 25 °C, besonders bevorzugt 5 °C bis 20 °C und/oder die Warmwassertemperatur insbesondere maximal 90 °C, bevorzugt 25 °C bis 90 °C, besonders bevorzugt 55 °C bis 65 °C. Das Mischwasser ist anschließend, beispielsweise über zumindest eine Flüssigkeitsleitung zumindest einer Sanitärarmatur, wie zum Beispiel einer Handbrause, Kopfbrause, Düse, Auslauf und/oder dergleichen an einer Dusche, Badewanne und/oder Waschbecken, zuführbar. Die vorgeschlagene Ventilkartusche kann beispielsweise in ein Armaturengehäuse der Sanitärarmatur und/oder eine Funktionseinheit eines Unterputzeinbaukörpers einer Sanitärarmatur eingesetzt werden, um einen Durchfluss der Flüssigkeit durch die zumindest eine Flüssigkeitsleitung zu steuern.

Hierzu weist die Ventilkartusche ein Kartuschengehäuse und eine Ventilspindel auf, die relativ zu dem Kartuschengehäuse um eine Drehachse drehbar ist. Das Kartuschengehäuse kann zumindest teilweise aus Kunststoff und/oder Metall, wie zum Beispiel Messing, bestehen. Das Kartuschengehäuse kann zudem nach Art eines Kopfstücks ausgebildet sein. Die Ventilspindel ist zumindest teilweise in dem Kartuschengehäuses gelagert und/oder relativ zu dem Kartuschengehäuse mit einem Griff der Ventilkartusche durch einen Benutzer um die Drehachse drehbar. An der Ventilspindel ist eine Steuerscheibe verdrehfest befestigt, die mit der Ventilspindel auf einer Durchlassscheibe um die Drehachse drehbar ist. Die Durchlassscheibe weist einen ersten Durchlass und einen zweiten Durchlass auf. Im montierten Zustand der Ventilkartusche kann der erste Durchlass mit einer ersten Flüssigkeitsleitung für eine erste Sanitärarmatur und/oder der zweite Durchlass mit einer zweiten Flüssigkeitsleitung für eine zweite Sanitärarmatur verbunden sein. Mittels der Steuerscheibe ist ein Flüssigkeitsfluss durch den ersten Durchlass und/oder den zweiten Durchlass der Durchlassscheibe steuerbar.

Die Ventilkartusche weist ferner einen Griffadapter auf. Der Griffadapter ist in einer ersten Stellung und in einer zweiten Stellung mit der Ventilspindel verbindbar. Hierzu weist die Ventilspindel einen Steg auf, der je nach gewünschter Stellung des Griffadapters entweder in eine erste Nut des Griffadapters oder in eine zweite Nut des Griffadapters eingreift. In der ersten Stellung des Griffadapters befindet sich die Ventilspindel in einer ersten Drehorientierung und in der zweiten Stellung des Griffadapters in einer zweiten Drehorientierung zu dem Griff. Durch die Änderung der Stellung des Griffadapters nimmt die Ventilspindel bei gleichem Drehwinkel des Griffs (in Bezug auf das Kartuschengehäuse) somit eine andere Drehposition ein. Da die Steuerscheibe verdrehfest mit der Ventilspindel verbunden ist, ist hierdurch die Steuerung des Flüssigkeitsflusses durch den ersten Durchlass und/oder den zweiten Durchlass umstellbar bzw. änderbar. Beispielsweise kann hiermit einstellbar sein, dass in der ersten Stellung des Griffadapters beide Durchlässe durch die Ventilkartusche bzw. die Steuerscheibe der Ventilkartusche steuerbar bzw. freigebbar sind und/oder in der zweiten Stellung des Griffadapters nur einer der beiden Durchlässe durch die Ventilkartusche bzw. die Steuerscheibe der Ventilkartusche steuerbar bzw. freigebbar ist. Durch die Änderung der Stellung des Griffadapters kann somit die Funktion der Ventilkartusche je nach Erfordernis für die jeweilige Sanitärarmatur oder den jeweiligen Unterputzeinsatzkörper angepasst werden, ohne dass der Verlauf bzw. die geometrische Lage der Flüssigkeitszuführung zur Ventilkartusche bzw. die Flüssigkeitsabführung von der Ventilkartusche an der Sanitärarmatur bzw. dem Unterputzeinbaukörper geändert werden muss.

Der Griffadapter ist in der ersten Stellung und der zweiten Stellung auf die Ventilspindel aufsteckbar. Hierzu kann der Griffadapter zumindest teilweise hülsenförmig ausgebildet sein. Zudem ist der Griffadapter in der ersten Stellung und/oder der zweiten Stellung mit einer Clip-Verbindung an der Ventilspindel (lösbar) befestigbar. Der Griffadapter kann zwischen der ersten Stellung und der zweiten Stellung umsteckbar sein.

Die erste Stellung des Griffadapters und die zweite Stellung des Griffadapters können um 120° um die Drehachse verdreht zueinander sein.

Die Durchlassscheibe kann einen ersten Sektor, zweiten Sektor und dritten Sektor haben, die um die Drehachse um jeweils 120° versetzt zueinander angeordnet sind, wobei der erste Durchlass in dem zweiten Sektor und der zweite Durchlass in dem dritten Sektor angeordnet sind. Die Sektoren können nach Art von (gleichgroßen) Kreissektoren ausgebildet sein und/oder weisen jeweils einen Mittelpunktswinkel von 120° auf. Die Sektoren können somit jeweils Kuchenstückförmig ausgebildet sein.

Die Steuerscheibe kann eine Öffnung zum Freigeben des ersten Durchlasses oder des zweiten Durchlasses aufweisen. Die Öffnung kann beispielsweise nach Art einer Bohrung durch die Steuerscheibe oder Ausnehmung ausgebildet sein. Die Öffnung weist insbesondere eine Größe auf, die maximal einer Größe einer der Sektoren der Durchlassscheibe entspricht. Die Steuerscheibe gibt den ersten Durchlass und/oder zweiten Durchlass frei, wenn die Öffnung der Steuerscheibe den ersten Durchlass und/oder den zweiten Durchlass zumindest teilweise überschneidet. Hierdurch kann die Flüssigkeit von einem Zulaufraum der Ventilkartusche durch die Öffnung und den ersten Durchlass und/oder durch die Öffnung und den zweiten Durchlass beispielsweise zu einer ersten Sanitärarmatur und/oder zweiten Sanitärarmatur abfließen.

In der ersten Stellung des Griffadapters kann der erste Durchlass und der zweite Durchlass in einer Schließstellung des Griffs durch die Steuerscheibe geschlossen sein. Bei der Schließstellung des Griffs handelt es sich insbesondere um eine 0°-Stellung und/oder 12-Uhr-Stellung des Griffs (relativ zu dem Kartuschengehäuse).

Durch eine Drehung des Griffs um die Drehachse kann der erste Durchlass oder der zweite Durchlass durch die Steuerscheibe freigegeben werden. Insbesondere kann durch eine Drehung des Griffs um 120° um die Drehachse der erste Durchlass oder der zweite Durchlass durch die Steuerscheibe, insbesondere vollständig, freigegeben werden. Beispielsweise kann bei einer Drehung des Griffs aus der Schließstellung gegen den Uhrzeigersinn der erste Durchlass zumindest teilweise freigegeben und/oder bei einer Drehung des Griffs aus der Schließstellung im Uhrzeigersinn der zweite Durchlass zumindest teilweise freigegeben werden. Weiterhin kann die Ventilkartusche ein Anschlagelement, beispielsweise nach Art eines Anschlagrings, aufweisen, durch den ein Drehwinkel des Griffs auf 120° begrenzbar ist. Das Anschlagelement kann derart ausgebildet sein, dass der Griff aus der Schließstellung nur gegen den Uhrzeigersinn oder nur im Uhrzeigersinn, insbesondere um 120°, drehbar ist. Alternativ kann die Ventilkartusche ein Anschlagelement aufweisen, durch den der Drehwinkel des Griffs auf 240° begrenzbar ist. Das Anschlagelement kann derart ausgebildet sein, dass der Griff aus der Schließstellung 120° gegen den Uhrzeigersinn und 120° im Uhrzeigersinn drehbar ist.

In der zweiten Stellung des Griffadapters kann der erste Durchlass oder der zweite Durchlass in einer Schließstellung des Griffs durch die Steuerscheibe freigegeben sein. Um ein Abfließen der Flüssigkeit durch den freigegebenen Durchlass in der Schließstellung des Griffs zu verhindern, kann der freigegebene Durchlass oder eine Flüssigkeitsleitung stromabwärts des freigegebenen Durchlasses mit einem Schließelement, beispielsweise einem Stopfen, flüssigkeitsdicht verschlossen sein, sodass keine Flüssigkeit über den in der Schließstellung des Griffs freigegebenen Durchlass abfließen kann.

Der in der Schließstellung des Griffs durch die Steuerscheibe freigegebene Durchlass kann durch ein Schließelement verschlossen sein.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Dabei sind gleiche Bauteile in den Figuren mit denselben Bezugszeichen versehen. Es zeigen beispielhaft und schematisch:
- Fig. 1:: eine Ventilkartusche in einer Seitenansicht;
- Fig. 2:: eine Detailansicht der Ventilkartusche in einer perspektivischen Darstellung;
- Fig. 3:: eine Durchlassscheibe der Ventilkartusche in einer perspektivischen Darstellung;
- Fig. 4:: die Ventilkartusche mit montiertem Griff in einem Längsschnitt;
- Fig. 5:: ein Griffadapter der Ventilkartusche in einer perspektivischen Darstellung;
- Fig. 6:: die Ventilkartusche mit montiertem Griff in einer Frontansicht;
- Fig. 7:: eine Steuerscheibe einer ersten Variante der Ventilkartusche in einer Schließstellung;
- Fig. 8:: die Steuerscheibe der ersten Variante der Ventilkartusche in einer ersten Freigabeposition;
- Fig. 9:: eine Steuerscheibe einer zweiten Variante der Ventilkartusche in einer zweiten Freigabeposition;
- Fig. 10:: eine Steuerscheibe einer dritten Variante der Ventilkartusche in einer dritten Freigabeposition;
- Fig. 11:: eine Steuerscheibe einer vierten Variante der Ventilkartusche in einer Schließstellung;
- Fig. 12:: die Steuerscheibe der vierten Variante der Ventilkartusche in einer Freigabeposition;
- Fig. 13:: eine erste Variante eines Schließelements;
- Fig. 14:: eine zweite Variante eines Schließelements; und
- Fig. 15:: eine dritte Variante eines Schließelements.

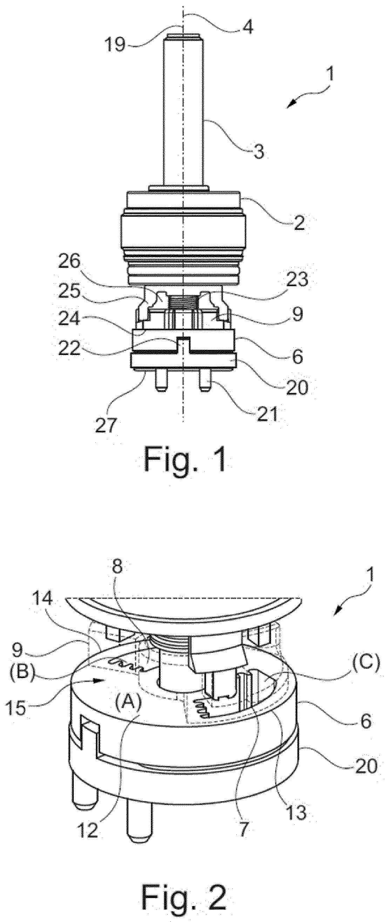

Die Fig. 1 zeigt eine Ventilkartusche 1 in einer Seitenansicht. Die Ventilkartusche 1 weist ein Kartuschengehäuse 2 nach Art eines Kopfstücks auf. Das Kartuschengehäuse 2 ist beispielsweise in ein Gehäuse einer Sanitärarmatur einschraubbar. Durch das Kartuschengehäuse 2 erstreckt sich eine Ventilspindel 3, die in dem Kartuschengehäuse 2 um eine Drehachse 4 drehbar gelagert ist. Die Drehachse 4 verläuft hier konzentrisch zu einer Längsachse 19 der Ventilspindel 3. An einem längsseitigen Ende der Ventilspindel 3 ist ein Bodenstück 20 befestigt.

Das Bodenstück 20 weist an seiner Unterseite erste Pins 21 auf, mit denen das Bodenstück nach der Montage der Ventilkartusche 1 beispielsweise an dem Gehäuse der Sanitärarmatur drehfest gehalten wird. Gleichzeitig ist das Bodenstück 20 drehbar an der Ventilspindel 3 befestigt, sodass die Ventilspindel 3 nach der Montage der Ventilkartusche 1 gegenüber dem Bodenstück 20 verdrehbar ist. Auf dem Bodenstück 20 ist eine Durchlassscheibe 6 gelagert, die durch zweite Pins 22 auf der Oberseite des Bodenstücks 20 verdrehfest zum Bodenstück 20 gehalten ist.

Auf der Durchlassscheibe 6 ist eine Steuerscheibe 9 angeordnet, die durch ein Federelement 23 auf die Durchlassscheibe 6 gedrückt wird. Hierdurch wird zwischen der Steuerscheibe 9 und der Durchlassscheibe 6 eine Dichtebene 24 gebildet. Die Steuerscheibe 9, die Durchlassscheibe 6 und das Bodenstück 20 bilden zusammen ein Scheibenpaket. In die Steuerscheibe 9 greifen Spindelarme 25 der Ventilspindel 3 ein, sodass die Steuerscheibe 9 durch ein Drehen der Ventilspindel 3 um die Drehachse 4 auf der Durchlassscheibe 6 drehbar ist. Die Steuerscheibe 9 ist somit relativ zu der Durchlassscheibe 6 drehbar. Durch das Drehen der Steuerscheibe 9 sind hier nicht zu erkennende Durchlässe 7, 8 in der Steuerscheibe 9 freigebbar. Im montierten Zustand der Ventilkartusche 1 kann eine Flüssigkeit seitlich in einen Zulaufraum 26 zulaufen. Der Zulaufraum 26 ist zwischen dem Kartuschengehäuse 2 und der Steuerscheibe 9 ausgebildet. Wird zumindest einer der in der Durchlassscheibe 6 ausgebildeten Durchlässe 7, 8 durch die Steuerscheibe 9 freigegeben, kann die Flüssigkeit durch die jeweiligen Durchlässe 7, 8 parallel zu der Längsachse 19 in Richtung eines an einer Unterseite des Bodenstücks 20 ausgebildeten Ventilsitzes 27 fließen.

Die Fig. 2 zeigt eine Detailansicht der Ventilkartusche 1 in einer perspektivischen Darstellung im Bereich der Durchlassscheibe 6. Die auf der Durchlassscheibe 6 drehbar angeordnete Steuerscheibe 9 ist hier durchsichtig dargestellt. Das Bodenstück 20 und die Durchlassscheibe 6 sind kreisförmig ausgebildet. Die Steuerscheibe 9 ist ebenfalls kreisförmig, wobei diese eine Öffnung 15 in Form einer ringsegmentförmigen Ausnehmung aufweist. Die Öffnung 15 ist hier in einen ersten Sektor 12 der Durchlassscheibe 6 gedreht, in der kein Durchlass 7, 8 ausgebildet ist. Der in einem zweiten Sektor 13 der Durchlassscheibe 6 ausgebildete erste Durchlass 7 und der in einem dritten Sektor 14 ausgebildete zweite Durchlass 8 sind hier durch die Steuerscheibe 9 verdeckt, sodass keine Flüssigkeit aus dem in der Fig. 1 gezeigten Zulaufraum 26 durch die Durchlässe 7, 8 abfließen kann. Die Ventilkartusche 1 ist somit in der hier gezeigten Drehposition der Steuerscheibe 9 geschlossen.

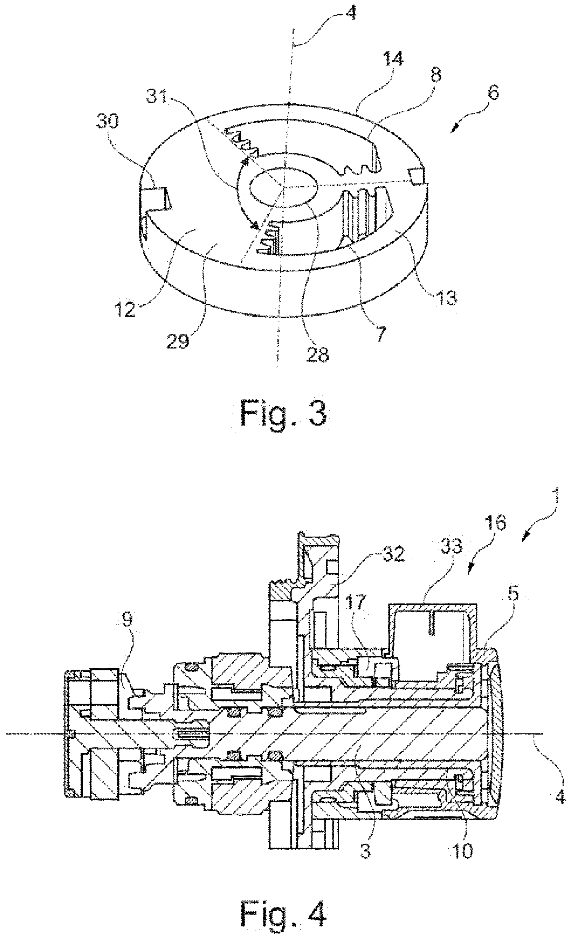

Die Fig. 3 zeigt die Durchlassscheibe 6 in einer perspektivischen Darstellung. Die Durchlassscheibe weist in ihrem Zentrum eine Spindelöffnung 28 auf, durch die sich die Spindel im montierten Zustand der Durchlassscheibe 6 erstreckt. Weiterhin weist die Durchlassscheibe 6 an ihrer Oberseite 29 zwei Aufnahmen 30 auf, in die die in der Fig. 1 gezeigten Spindelarme 25 eingreifen. Die Oberseite 29 der Durchlassscheibe 6 ist in einen ersten Sektor 12, zweiten Sektor 13 und einen dritten Sektor 14 unterteilt (dargestellt mit gestrichelten Linien). Die Sektoren 12, 13, 14 sind nach Art von (gleichgroßen) Kreissektoren ausgebildet und/oder weisen jeweils einen Mittelpunktswinkel 31 von 120° auf. Der erste Durchlass 7 befindet sich in dem zweiten Sektor 13 und der zweite Durchlass 8 in dem dritten Sektor 14. Die Durchlässe 7, 8 sind jeweils bogenförmig ausgebildet und erstrecken sich parallel zu der Drehachse 4 vollständig durch die Durchlassscheibe 6. Weiterhin weisen die Durchlässe 7, 8 an ihren Einströmkanten eine geräuschmindernde Geometrie in Form eines Sägezahnprofils auf. Die Durchlassscheibe 6 ist zudem spiegelsymmetrisch ausgebildet.

Die Fig. 4 zeigt die Ventilkartusche 1 mit montiertem Griff 5 in einem Längsschnitt. Die Ventilkartusche 1 ist hier an eine Trägerplatte 32 montiert. Auf die Ventilspindel 3 ist ein Griffadapter 10 aufgesteckt, über den der Griff 5 verdrehfest mit der Spindel 3 verbunden ist. Die Ventilkartusche 1 ist somit durch einen Benutzer durch Drehen des Griffs 5 um die Drehachse 4 betätigbar. Der Griff 5 befindet sich hier in einer Schließstellung 16, in der die Ventilkartusche 1 geschlossen ist. In der Schließstellung 16 befindet sich ein sich radial nach außen erstreckendes Griffelement 33 in einer 0°-Stellung bzw. 12 Uhr Stellung. Weiterhin umfasst die Ventilkartusche ein Anschlagelement 17 nach Art eines Anschlagrings, durch den ein Drehwinkel des Griffs 5, der Spindel 3 und der Steuerscheibe 9 begrenzt wird.

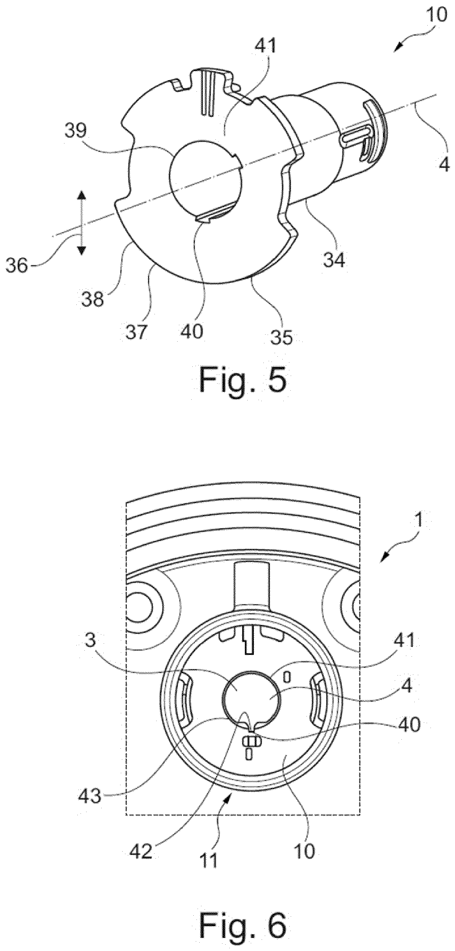

Die Fig. 5 zeigt den Griffadapter 10 in einer perspektivischen Darstellung. Der Griffadapter 10 weist entlang der Drehachse 4 einen hülsenförmigen Abschnitt 34 auf, mit dem der Griffadapter 10 auf die Ventilspindel 3 verdrehfest aufsteckbar ist. Weiterhin kann der Griffadapter 10 mit der Ventilspindel 3 verrastbar sein. An einem längsseitigen Ende weist der Griffadapter einen Flanschabschnitt 35 auf, der sich von dem hülsenförmigen Abschnitt 34 in eine radiale Richtung 36 (senkrecht zur Drehachse 4) erstreckt. Der Flanschabschnitt 35 kann an seiner Umfangsfläche 37 eine Verzahnung 38 aufweisen, über die der Griffadapter 10 verdrehfest mit dem Griff 5 verbindbar ist. Der Griffadapter 10 weist an einem Innendurchmesser 39 eine erste Nut 40 und eine zweite Nut 41 auf. Die erste Nut 40 und die zweite Nut 41 erstrecken sich in dem Innendurchmesser 39 parallel zu der Drehachse 4. Weiterhin sind die erste Nut 40 und die zweite Nut 41 um die Drehachse 4 um 120° versetzt zueinander angeordnet. Die erste Nut 40 befindet sich hier an einer 6 Uhr Position und die zweite Nut 41 an einer 2 Uhr Position.

Die Fig. 6 zeigt die Ventilkartusche 1 der Fig. 4 in einer Frontansicht. Der Griffadapter 10 ist hier in einer ersten Stellung 11 auf die Ventilspindel 3 aufgesteckt. In der ersten Stellung 11 greift ein parallel zu der Drehachse 4 (die hier senkrecht zur Zeichnungsebene verläuft) verlaufender Steg 42 der Ventilspindel 3 in die erste Nut 40 des Griffadapters 10 ein. Hierdurch ist eine erste Drehorientierung der Ventilspindel 3 zum Griff 5 festgelegt. Der Steg 42 ist an eine Außenfläche 43 der Ventilspindel 3 ausgebildet. Der Griffadapter 10 kann in einer zweiten Stellung mit der Ventilspindel 3 verbunden werden. Hierzu wird der Griffadapter 10 von der Ventilspindel 3 gelöst und so auf die Ventilspindel 3 gesteckt, dass der Steg 42 statt in die erste Nut 40 in die zweite Nut 41 eingreift. Hierzu muss die Ventilspindel 3 um 120° zum Griffadapter 10 gedreht werden. Die Ventilspindel 3 befindet sich dann in einer zweiten Drehorientierung zum Griff 5. Im Vergleich zur ersten Stellung 11 ist die Ventilspindel 3 in der zweiten Stellung des Griffadapters 10 um 120° zum Griffadapter 10 und zum Griff 5 um die Drehachse 4 verdreht.

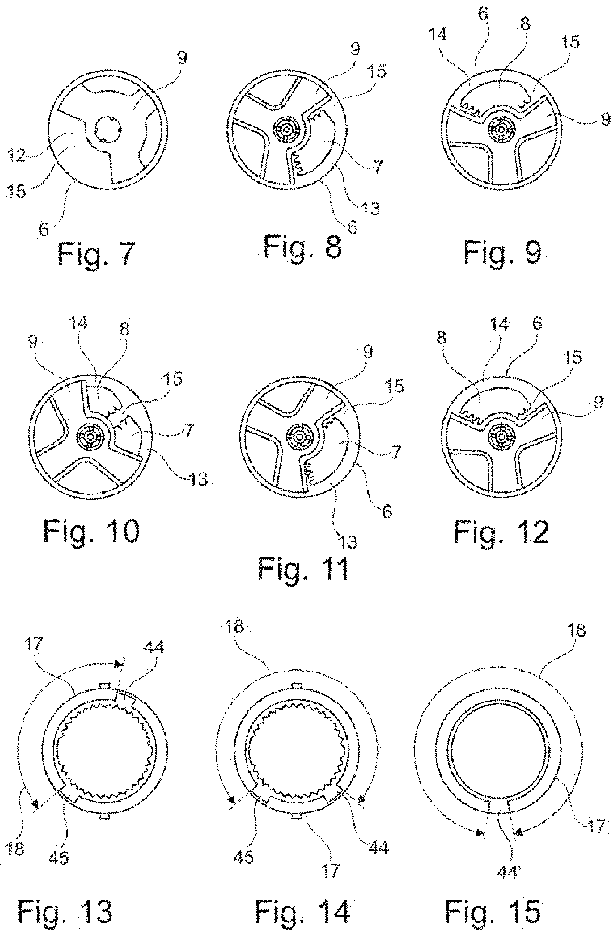

Die Fig. 7 bis 12 zeigen verschiedene Stellungen der Steuerscheibe 9 in Bezug auf die Durchlassscheibe 6 in Abhängigkeit von den Stellungen des Griffadapters 10 und dem Drehwinkel des Griffs 5. Die Durchlassscheibe 6 und die Steuerscheibe 9 sind jeweils in einer Draufsicht gezeigt. Die Fig. 7 und 8 zeigen die Durchlassscheibe 6 und die Steuerscheibe 9 bei einer ersten Konfiguration der Ventilkartusche 1, in der der Griffadapter 10 in der ersten Stellung 11 (vgl. Fig. 6) an der Ventilspindel 3 befestigt ist. In der Fig. 7 befindet sich der Griff 5 in der Schließstellung 16, bei der es sich um eine 0°-Stellung und/oder 12 Uhr Stellung handeln kann. Die Öffnung 15 der Steuerscheibe 9 ist dabei in den ersten Sektor 12 der Durchlassscheibe 6 gedreht, in dem sich kein Durchlass 7, 8 befindet. Die Ventilkartusche 1 ist dadurch geschlossen. Die Fig. 8 zeigt eine Stellung der Steuerscheibe 9, nachdem die Steuerscheibe 9 mit dem Griff 5 und der Ventilspindel 3 um 120° gegen den Uhrzeigersinn gedreht wurde. Die Öffnung 15 der Steuerscheibe 9 befindet sich nun in dem zweiten Sektor 13 der Durchlassscheibe 6, sodass der erste Durchlass 7 freigegeben ist. Eine Flüssigkeit kann somit durch den Durchlass 7 abfließen. In der ersten Konfiguration der Ventilkartusche 1 weist die Ventilkartusche 1 das in der Fig. 13 gezeigte Anschlagelement 17 auf, durch den ein Drehwinkel 18 des Griffs 5 auf 120° begrenzt wird. Hierzu weist das Anschlagelement 17 einen ersten Anschlag 44 und einen zweiten Anschlag 45 für den Griff 5 auf. Die Steuerscheibe 9 ist dadurch aus der in der Fig. 7 gezeigten Schließstellung nur um 120° gegen den Uhrzeigersinn in die in der Fig. 8 gezeigten Freigabestellung des ersten Durchlasses 7 verstellbar. In der ersten Konfiguration ist die Ventilkartusche 1 daher nach Art eines (rechtsschließenden) Oberteils ausgebildet, mit dem der Flüssigkeitsfluss lediglich einer Sanitärarmatur steuerbar ist.

Die Fig. 9 zeigt eine zweite Konfiguration der Ventilkartusche 1, die sich von der ersten Konfiguration lediglich durch das in der Fig. 14 gezeigte Anschlagelement 17 unterscheidet. Das in der Fig. 14 gezeigte Anschlagelement 17 begrenzt den Drehwinkel 18 des Griffs 5 auf 240°. In der zweiten Konfiguration ist die Steuerscheibe 9 nicht nur in die in der Fig. 7 gezeigte Schließstellung und in die in der Fig. 8 gezeigte Freigabestellung des ersten Durchlasses 7 verstellbar, sondern zusätzlich aus der in der Fig. 7 gezeigten Schließstellung im Uhrzeigersinn um 120° in die in der Fig. 9 gezeigte Freigabestellung des zweiten Durchlasses 8. In dieser Position befindet sich die Öffnung 15 der Steuerscheibe 8 im Bereich des dritten Sektors 14 der Durchlassscheibe 6, in dem sich der zweite Durchlass 8 befindet. Hierdurch kann die Flüssigkeit über den zweiten Durchlass 8 abfließen. In der zweiten Konfiguration ist die Ventilkartusche 1 daher nach Art eines Aquadimmers ausgebildet, mit dem der Flüssigkeitsfluss von zwei Sanitärarmaturen steuerbar ist.

Die Fig. 10 zeigt eine dritte Konfiguration der Ventilkartusche 1, die sich von der ersten und zweiten Konfiguration lediglich durch das in der Fig. 15 gezeigte Anschlagelement 17 unterscheidet. Das in der Fig. 15 gezeigte Anschlagelement 17 begrenzt den Drehwinkel 18 des Griffs 5 auf 360°. Hierzu weist das Anschlagelement 17 in der in der Fig. 15 gezeigten Ausführung lediglich einen ersten Anschlag 44 für den Griff 5 auf, der hier nach Art eines Schleppanschlags ausgebildet ist. Hierdurch ist die Steuerscheibe 9 aus der in der Fig. 7 gezeigten Schließstellung nicht nur in die in der Fig. 8 und 9 gezeigten Positionen drehbar, sondern zusätzlich in die in der Fig. 10 gezeigte Position. Hierbei wurde die Steuerscheibe 9 aus der in der Fig. 7 gezeigten Position (Schließstellung 16 des Griffs 5) um 180° im Uhrzeigersinn oder gegen den Uhrzeigersinn gedreht, sodass sich die Öffnung 15 der Steuerscheibe 9 teilweise in dem zweiten Sektor 13 und dem dritten Sektor 14 der Durchlassscheibe 6 befindet. Hierdurch sind (gleichzeitig) sowohl der erste Durchlass 7 als auch der zweite Durchlass 8 zumindest teilweise freigebbar. In der dritten Konfiguration ist die Ventilkartusche 1 daher ebenfalls nach Art eines Aquadimmers ausgebildet, mit dem der Flüssigkeitsfluss von zwei Sanitärarmaturen steuerbar ist, wobei hier der Flüssigkeitsfluss für beide Sanitärarmaturen gleichzeitig aktivierbar ist.

Die Fig. 11 zeigt eine vierte Konfiguration der Ventilkartusche 1, die sich von der ersten Konfiguration lediglich dadurch unterscheidet, dass der Griffadapter 10 in der zweiten Stellung an der Ventilspindel 3 befestigt ist. In der Fig. 11 befindet sich der Griff 5 in der Schließstellung 16, bei der es sich um die 0°-Stellung und/oder 12 Uhr Stellung handeln kann. Da der Griffadapter 10 in der zweiten Stellung an der Ventilspindel 3 befestigt ist, befindet sich die Öffnung 15 der Steuerscheibe 9 in der Schließstellung 16 des Griffs 5 im Bereich des zweiten Sektors 13 der Durchlassscheibe 6, sodass der erste Durchlass 7 freigegeben ist. Um in der Schließstellung 16 des Griffs 5 ein Abfließen der Flüssigkeit durch den ersten Durchlass 7 zu verhindern, ist der erste Durchlass 7 und/oder ein sich dem ersten Durchlass 7 anschließender Flüssigkeitskanal durch ein Schließelement, beispielsweise nach Art eines Stopfens, flüssigkeitsdicht verschlossen. In der vierten Konfiguration der Ventilkartusche 1 weist diese das in der Fig. 13 gezeigte Anschlagelement 17 auf, das den Drehwinkel des Griffs 5 auf 120° begrenzt. Die Fig. 12 zeigt die Steuerscheibe 9, nachdem diese durch den Griff 5 und die Ventilspindel 3 durch eine Drehung um 120° gegen den Uhrzeigersinn gedreht wurde. Hierdurch befindet sich die Öffnung 15 der Steuerscheibe 9 in dem dritten Sektor 14 der Durchlassscheibe 6, sodass der zweite Durchlass 8 freigegeben ist. Hierdurch kann die Flüssigkeit über den zweiten Durchlass abfließen. In der vierten Konfiguration ist die Ventilkartusche 1 ebenfalls nach Art eines (rechtsschließenden) Oberteils ausgebildet, mit dem der Flüssigkeit plus lediglich einer Sanitärarmatur steuerbar ist.

Durch die vorliegende Erfindung können unterschiedlich konfigurierte Ventilkartuschen mit gleichen Armaturengehäusen bzw. gleichen Gehäuseeinsätzen verwendet werden.

### Bezugszeichenliste

- 1: Ventilkartusche
- 2: Kartuschengehäuse
- 3: Ventilspindel
- 4: Drehachse
- 5: Griff
- 6: Durchlassscheibe
- 7: erster Durchlass
- 8: zweiter Durchlass
- 9: Steuerscheibe
- 10: Griffadapter
- 11: erste Stellung
- 12: erste Sektor
- 13: zweite Sektor
- 14: dritte Sektor
- 15: Öffnung
- 16: Schließstellung
- 17: Anschlagelement
- 18: Drehwinkel
- 19: Längsachse
- 20: Bodenstück
- 21: erster Pin
- 22: zweiter Pin
- 23: Federelement
- 24: Dichtebene
- 25: Spindelarm
- 26: Zulaufraum
- 27: Ventilsitz
- 28: Spindelöffnung
- 29: Oberseite
- 30: Aufnahme
- 31: Mittelpunktswinkel
- 32: Trägerplatte
- 33: Griffelement
- 34: hülsenförmigen Abschnitt
- 35: Flanschabschnitt
- 36: radiale Richtung
- 37: Umfangsfläche
- 38: Verzahnung
- 39: Innendurchmesser
- 40: erste Nut
- 41: zweite Nut
- 42: Steg
- 43: Außenfläche
- 44: erster Anschlag
- 45: zweiter Anschlag

## Patentansprüche

1. Ventilkartusche (1) für zumindest eine Sanitärarmatur, zumindest aufweisend:
- ein Kartuschengehäuse (2),
- eine Ventilspindel (3), die relativ zu dem Kartuschengehäuse (2) um eine Drehachse (4) drehbar ist,
- einen Griff (5) zum Drehen der Ventilspindel (3),
- eine Durchlassscheibe (6) mit einem ersten Durchlass (7) und einem zweiten Durchlass (8),
- eine Steuerscheibe (9), die zum Steuern eines Flüssigkeitsflusses durch den ersten Durchlass (7) oder den zweiten Durchlass (8) der Durchlassscheibe (6) mit der Ventilspindel (3) drehbar ist, **gekennzeichnet durch**
- einen Griffadapter (10), der zur Einstellung einer ersten Drehorientierung der Ventilspindel (3) zum Griff (5) in einer ersten Stellung (11) mit der Ventilspindel (3) verbindbar und zur Einstellung einer zweiten Drehorientierung der Ventilspindel (3) zum Griff (5) in einer zweiten Stellung mit der Ventilspindel (3) verbindbar ist, sodass die Steuerung des Flüssigkeitsflusses durch den ersten Durchlass (7) oder den zweiten Durchlass (8) mittels der Steuerscheibe (9) umstellbar ist, wobei der Griffadapter (10) und der Griff (5) separate Bauteile sind, wobei der Griffadapter (10) in der ersten Stellung (11) und der zweiten Stellung auf die Ventilspindel (3) aufsteckbar ist, wobei der Griffadapter (10) in der ersten Stellung (11) und/oder der zweiten Stellung mit einer Clip-Verbindung an der Ventilspindel (3) lösbar befestigbar ist.

2. Ventilkartusche (1) nach einem der vorhergehenden Patentansprüche, wobei die erste Stellung (11) des Griffadapters (10) und die zweite Stellung des Griffadapters um 120° um die Drehachse (4) verdreht zueinander sind.

3. Ventilkartusche (1) nach einem der vorhergehenden Patentansprüche, wobei die Durchlassscheibe (6) einen ersten Sektor (12), zweiten Sektor (13) und dritten Sektor (14) hat, die um die Drehachse (4) um jeweils 120° versetzt zueinander angeordnet sind, wobei der erste Durchlass (7) in dem zweiten Sektor (13) und der zweite Durchlass (8) in dem dritten Sektor (14) angeordnet sind.

4. Ventilkartusche (1) nach einem der vorhergehenden Patentansprüche, wobei die Steuerscheibe (9) eine Öffnung (15) zum Freigeben des ersten Durchlasses (7) oder des zweiten Durchlasses (8) aufweist.

5. Ventilkartusche (1) nach einem der vorhergehenden Patentansprüche, wobei in der ersten Stellung (11) des Griffadapters (10) der erste Durchlass (7) und der zweite Durchlass (8) in einer Schließstellung (16) des Griffs (5) durch die Steuerscheibe (9) geschlossen sind.

6. Ventilkartusche nach Patentanspruch 5, wobei durch eine Drehung des Griffs (5) um die Drehachse (4) der erste Durchlass (7) oder der zweite Durchlass (8) durch die Steuerscheibe (9) freigegeben werden.

7. Ventilkartusche (1) nach einem der vorhergehenden Patentansprüche, wobei in der zweiten Stellung des Griffadapters (10) der erste Durchlass (7) oder der zweite Durchlass (8) in einer Schließstellung (16) des Griffs (5) durch die Steuerscheibe (9) freigegeben ist.

8. Ventilkartusche (1) nach Patentanspruch 7, wobei der in der Schließstellung (16) des Griffs (5) durch die Steuerscheibe (9) freigegebene Durchlass (7, 8) durch ein Schließelement verschlossen ist.

9. Ventilkartusche (1) nach einem der vorhergehenden Patentansprüche, aufweisend ein Anschlagelement (17), das einen Drehwinkel (18) des Griffs (5) um die Drehachse (4) auf 120°, 240° oder >240° bis 360° begrenzt.

## Claims

1. A valve cartridge (1) for at least one plumbing fitting, comprising at least:
- a cartridge housing (2),
- a valve stem (3) which is rotatable relative to the cartridge housing (2) about an axis of rotation (4,)
- a handle (5) for rotating the valve stem (3),
- a passage disk (6) with a first passage (7) and a second passage (8),
- a control disk (9) which is rotatable with the valve stem (3) for controlling a liquid flow through the first passage (7) or the second passage (8) of the passage disk (6), **characterized by**
- a handle adapter (10) connectable to the valve stem (3) for setting a first rotational orientation of the valve stem (3) with respect to the handle (5) in a first position (11) and connectable to the valve stem (3) for setting a second rotational orientation of the valve stem (3) with respect to the handle (5) in a second position so that the control of the liquid flow through the first passage (7) or the second passage (8) can be changed by means of the control disk (9), wherein the handle adapter (10) and the handle (5) are separate components, wherein the handle adapter (10) can be fitted to the valve stem (3) in the first position (11) and the second position, wherein the handle adapter (10) can be releasably attached to the valve stem (3) in the first position (11) and/or the second position by means of a clip connection.

2. The valve cartridge (1) according to any one of the preceding claims, wherein the first position (11) of the handle adapter (10) and the second position of the handle adapter are rotated by 120° relative to each other about the axis of rotation (4).

3. The valve cartridge (1) according to any one of the preceding claims, wherein the passage disk (6) has a first sector (12), a second sector (13), and a third sector (14), which are arranged offset to one another in each case by 120° about an axis of rotation (4), wherein the first passage (7) is arranged in the second sector (13) and the second passage (8) is arranged in the third sector (14).

4. The valve cartridge (1) according to any one of the preceding claims, wherein the control disk (9) has an opening (15) for releasing the first passage (7) or the second passage (8).

5. The valve cartridge (1) according to any one of the preceding claims, wherein, in the first position (11) of the handle adapter (10), the first passage (7) and the second passage (8) are closed by the control disk (9) in a closed position (16) of the handle (5).

6. The valve cartridge (1) according to claim 5, wherein the first passage (7) or the second passage (8) is released by the control disk (9) by a rotation of the handle (5) about the axis of rotation (4).

7. The valve cartridge (1) according to any one of the preceding claims, wherein, in the second position of the handle adapter (10), the first passage (7) or the second passage (8) is released by the control disk (9) in a closed position (16) of the handle (5).

8. The valve cartridge (1) according to claim 7, wherein the passage (7, 8) released by the control disk (9) in the closed position (16) of the handle (5) is closed by a closing element.

9. The valve cartridge (1) according to any one of the preceding claims, comprising a stop element (17) that limits an angle of rotation (18) of the handle (5) about the axis of rotation (4) to 120°, 240°, or >240° to 360°.

## Revendications

1. Cartouche de vanne (1), destinée à au moins une robinetterie sanitaire, comportant au moins:
- un corps (2) de cartouche,
- une tige (3) de vanne, qui est rotative par rapport au corps (2) de cartouche autour d'un axe de rotation (4),
- une poignée (5), destinée à faire tourner la tige (3) de vanne,
- un disque de passage (6), pourvu d'un premier passage (7) et d'un deuxième passage (8),
- un disque de commande (9), qui pour commander un flux de liquide à travers le premier passage (7) ou le deuxième passage (8) du disque de passage (6) peut tourner à l'aide de la tige (3) de vanne, **caractérisée par**
- un adaptateur (10) de poignée, qui pour le réglage d'une première orientation en rotation de la tige (3) de vanne par rapport à la poignée (5), est susceptible de se connecter dans une première position (11) avec la tige (3) de vanne et pour le réglage d'une deuxième orientation en rotation de la tige (3) de vanne par rapport à la poignée (5), est susceptible de se connecter dans une deuxième position avec la tige (3) de vanne, de telle sorte que la commande du flux de liquide à travers le premier passage (7) ou le deuxième passage (8) soit inversable au moyen du disque de commande (9), l'adaptateur (10) de poignée et la poignée (5) étant des composants séparés, l'adaptateur (10) de poignée étant emboîtable dans la première position (11) et dans la deuxième position sur la tige (3) de vanne, l'adaptateur (10) de poignée pouvant se fixer de manière amovible dans la première position (11) et / ou dans la deuxième position sur la tige (3) de vanne à l'aide d'un assemblage par clip.

2. Cartouche de vanne (1) selon l'une quelconque des revendications précédentes du brevet, la première position (11) de l'adaptateur (10) de poignée et la deuxième position de l'adaptateur de poignée étant tournées l'une par rapport à l'autre de la valeur de 120° autour de l'axe de rotation (4).

3. Cartouche de vanne (1) selon l'une quelconque des revendications précédentes du brevet, le disque de passage (6) ayant un premier secteur (12), un deuxième secteur (13) et un troisième secteur (14), qui sont placés avec un décalage de chaque fois 120° autour de l'axe de rotation (4), le premier passage (7) étant placé dans le deuxième secteur (13) et le deuxième passage (8) étant placé dans le troisième secteur (14).

4. Cartouche de vanne (1) selon l'une quelconque des revendications précédentes du brevet, le disque de commande (9) comportant un orifice (15) destiné à libérer le premier passage (7) ou le deuxième passage (8).

5. Cartouche de vanne (1) selon l'une quelconque des revendications précédentes du brevet, dans la première position (11) de l'adaptateur (10) de poignée, dans une position de fermeture (16) de la poignée (5), le premier passage (7) et le deuxième passage (8) étant fermés par le disque de commande (9).

6. Cartouche de vanne selon la revendication 5 du brevet, par une rotation de la poignée (5) autour de l'axe de rotation (4), le premier passage (7) ou le deuxième passage (8) étant libérés par le disque de commande (9).

7. Cartouche de vanne (1) selon l'une quelconque des revendications précédentes du brevet, dans la deuxième position de l'adaptateur (10) de poignée, le premier passage (7) ou le deuxième passage (8) étant libéré par le disque de commande (9) dans une position de fermeture (16) de la poignée (5).

8. Cartouche de vanne (1) selon la revendication 7, le passage (7, 8) libéré par le disque de commande (9) dans la position de fermeture (16) de la poignée (5) étant fermé par un élément de fermeture.

9. Cartouche de vanne (1) selon l'une quelconque des revendications précédentes du brevet, comportant un élément de butée (17), qui limite à 120°, 240° ou à > 240° jusqu'à 360° un angle de rotation (18) de la poignée (5) autour de l'axe de rotation (4).
